(19) Europäisches Patentamt
European Patent Office
Office européen des brevets

(11) EP 3 699 836 A1

(12) **EUROPEAN PATENT APPLICATION**
published in accordance with Art. 153(4) EPC

(43) Date of publication:
26.08.2020 Bulletin 2020/35

(51) Int Cl.:
*G06Q 10/06* (2012.01)

(21) Application number: 18868001.1

(22) Date of filing: 12.10.2018

(86) International application number:
PCT/CN2018/109982

(87) International publication number:
WO 2019/076245 (25.04.2019 Gazette 2019/17)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 17.10.2017 CN 201710962513

(71) Applicant: Nio Nextev Limited
Central, Hong Kong (CN)

(72) Inventors:
• DENG, Xiaojia
Jiading, Shanghai (CN)

• YUAN, Shengjie
Jiading, Shanghai (CN)
• HE, Liang
Jiading, Shanghai (CN)
• YANG, Yong
Jiading, Shanghai (CN)
• XU, Guodong
Jiading, Shanghai (CN)

(74) Representative: Vossius & Partner
Patentanwälte Rechtsanwälte mbB
Siebertstrasse 3
81675 München (DE)

(54) **METHOD FOR DETERMINING CHARGING STRATEGY OF SPENT BATTERIES IN BATTERY SWAP STATION, AND DEVICE**

(57) The present invention relates to technologies of new-energy automobile, especially a method of determining charging strategies for under-charge batteries within a battery-swapping station, a control device for executing the method, a battery-swapping station including the control device and a computer memory medium for execution of the method. The method according to the present invention comprises the following steps: obtaining estimated time required by to-be-charged vehicles to arrive at a battery-swapping station, wherein the to-be-charged vehicles are ones in a state of charge lower than a given threshold; dividing the to-be-charged vehicles according to the estimated time required by the to-be-charged vehicles to arrive at the battery-swapping station into a plurality of charge-requiring groups, each of which corresponds to one of a plurality of periods of time; determining a number of fully-charged batteries required by each of the charge-requiring groups; and, determining the charging strategies for the under-charge batteries of the battery-swapping station based on the number of fully-charged batteries required by the charge-requiring groups.

Fig. 1

**Description**

Technical Field

The present invention relates to technologies of new-energy automobile, especially a method of determining charging strategies for under-charge batteries within a battery-swapping station, a control device for executing the method, a battery-swapping station including the control device and a computer memory medium for executing the method.

Background Art

The power battery of battery-electric vehicles can generally be replenished with energy in two modes: charging mode and battery-swapping mode. The major flaw of the charging mode is the awful user experience caused by long time of charging. In comparison, the fulfillment of the battery-swapping mode can solve a series of problems such as short endurance mileage, charging difficulties and high cost of charging of electric vehicles. So to speak, the battery-swapping mode owns a superior prospect for technologies and marketing.

In the battery-swapping mode, charging operators will be responsible for unified management of power batteries; and, users obtain services by renting the power batteries from the battery-swapping operators. To ensure battery-swapping demands, battery-swapping stations generally need to reserve a certain number of fully-charged batteries as safety allowance. The fully-charged batteries are ordinarily derived from original reserves and recharged under-charge batteries. With efficiency and cost taken into consideration, the number of fully-charged batteries available at any time in a battery-swapping station should be matchable possibly with the demand on battery swapping. However, due to the uncertainty and dynamic amount of the demand on battery swapping, it is not easy to match them. Moreover, to prolong the service life of batteries, slow charging should be possibly employed for under-charge batteries, which, however, makes the match more difficult, especially in a battery-swapping station with a quite large operation scale.

Summary

One purpose of the present invention is to provide a method of determining charging strategies for under-charge batteries within a battery-swapping station, which will be helpful for increasing the use efficiency and prolonging the overall service life of batteries that are managed in the battery-swapping mode.

The method of determining charging strategies for under-charge batteries within a battery-swapping station, according to one aspect of the present invention, comprises the following steps:

acquiring estimated time required by to-be-charged vehicles to arrive at the battery-swapping station, wherein the to-be-charged vehicles are ones in a state of charge lower than a given threshold;

dividing the to-be-charged vehicles according to the estimated time required by the to-be-charged vehicles to arrive at the battery-swapping station into a plurality of charge-requiring groups, each of which corresponds to one of a plurality of periods of time;

determining a number of fully-charged batteries required by each of the charge-requiring groups; and

determining the charging strategies for the under-charge batteries of the battery-swapping station based on the number of fully-charged batteries required by the charge-requiring groups.

Preferably, in the method, the estimated time required by the to-be-charged vehicles to arrive at the battery-swapping station is determined based on a distance between the to-be-charged vehicles and the battery-swapping station and on an estimated speed.

Preferably, in the method, determination of the number of fully-charged batteries required by each of the charge-requiring groups comprises the following steps:

acquiring battery-swapping indexes of the to-be-charged vehicles within the charge-requiring group, wherein the battery-swapping indexes are obtained by the following equation:

$$\gamma_{i,j} = \frac{C_{i,j}}{T_{i,j}}$$

wherein $\gamma_{i,j}$ refers to the battery-swapping index of the $j^{th}$ to-be-charged vehicle within the $i^{th}$ charge-requiring group, $C_{i,j}$ refers to times of battery swapping having occurred in the state of charge lower than the given threshold for the $j^{th}$ to-be-charged vehicle in the $i^{th}$ charge-requiring group, and $T_{i,j}$ refers to total times of battery swapping having occurred for the $j^{th}$ to-be-charged vehicle within the $i^{th}$ charge-requiring group ; and

summing the battery-swapping indexes of the to-be-charged vehicles within the charge-requiring group to obtain the number of fully-charged batteries required by the charge-requiring group.

Preferably, in the method, charging rates for the under-charge batteries are employed to represent the charging strategies.

Preferably, in the method, determination of charging strategies comprises the following steps:

determining a combination value of the number of the fully-charged batteries required by the plurality of charge-requiring groups; and,

determining the charging strategies for the under-charge batteries of the battery-swapping station based on the number of fully-charged batteries availablein the battery-swapping station at present.

Preferably, in the method, determination of charging strategies comprises the following steps:

at a current charging rate, determining a number of batteries whose charging will be completed by the end of the plurality of periods of time;

determining the number of fully-charged batteries available in the plurality of periods of time based on the number of fully-charged batteries available at present and the number of batteries whose charging will be completed by the end of the plurality of periods of time; and

selecting from a plurality of charging rates an optimized one to match the number of fully-charged batteries available in the plurality of periods of time with the number of fully-charged batteries required by each of the charge-requiring groups most.

Another purpose of the present invention is to provide a control device, which will be helpful for increasing the use efficiency and prolonging the overall service life of batteries that are managed in the battery-swapping mode.

The control device according to another aspect of the present invention comprises:

a first module for acquiring estimated time required by to-be-charged vehicles to arrive at a battery-swapping station, wherein the to-be-charged vehicles are ones in a state of charge lower than a given threshold;

a second module for dividing the to-be-charged vehicles according to the estimated time required by the to-be-charged vehicles to arrive at the battery-swapping station into a plurality of charge-requiring groups;

a third module for determining a number of fully-charged batteries required by each of the charge-requiring groups; and

a fourth module for determining the charging strategies for the under-charge batteries of the battery-swapping station based on the number of fully-charged batteries required by the plurality of charge-requiring groups.

The use efficiency of batteries are managed and the overall service life is prolonged in the mode.

In another aspect of the present invention, the control device comprises a memory, a processor and a computer program that stored in the memory and may be executed by the processor, wherein the program is executed to enable aforesaid method.

Also, the further objective of the present invention is to provide a battery-swapping station, which will be helpful for increasing the use efficiency and prolonging the overall service life of batteries that are managed in the battery-swapping mode.

A battery-swapping station according to another aspect of the present invention comprises:

a control device as described above; and,

a charging device configured to charge under-charge batteries according to a charging rate determined by the control device.

Moreover, the present invention provides a computer-readable medium with a computer program stored thereon,

characterized in that the aforesaid method is enabled while the computer program is executed by a processor.

Description of Figures

The merits in aforesaid and/or other aspects of the present invention will become plainer and easier to understand through the following description in combination with all aspects of the figures below. The same and similar units of the figures are represented by identical mark numbers. Description of Figures:

Fig. 1 is a flow chart illustrating the method of determining charging strategies for under-charge batteries within a battery-swapping station according to one embodiment of the present invention.

Fig. 2 is a flow chart pertaining to the determination routine of charging strategies that can be applied to the embodiment illustrated by Fig. 1.

Fig. 3 is an exemplary chart indicating simulative results obtained from the determination routine of charging strategies of Fig. 2.

Fig. 4 is a flow chart pertaining to another determination routine of charging strategies that can be applied to the embodiment illustrated by Fig. 1.

Fig. 5 is an exemplary chart indicating the simulative results obtained from the determination routine of charging strategies of Fig. 4.

Fig. 6 is a schematic block diagram illustrating the control device according to another embodiment of the present invention.

Fig. 7 is a schematic block diagram illustrating the control device according to one else embodiment of the present invention.

Fig. 8 is a schematic block diagram illustrating the battery-swapping station according to one else embodiment of the present invention.

Embodiments

The present invention will be expounded more comprehensively by reference to the figures illustrating schematic embodiments of the present invention. However, the present invention may be enabled in various forms, which shall not be understood as one limited only to the embodiments given in the context. The above embodiments are intended to make the disclosure of the text comprehensive and complete so as to present the protection scope of the present invention more comprehensively to those skilled in the art.

In the Description, expressions such as "comprise" and "include" indicate that, apart from the units or steps directly and definitely described in the Description or Claims, the technical solution of the present invention does not exclude other units or steps that are not directly and definitely stated.

Expressions such as "first" or "second" do not mean the sequence of units in the aspects of time, space or size, which are employed purely to discriminate the units from each other.

The term "couple" shall be understood as a circumstance in which electric energy or signals are transmitted directly between two units, or as a circumstance in which electric energy or signals are transmitted via one or a plurality of third units.

The term "fully-charged batteries" shall be understood as batteries in a state of charge higher than or equal to a relatively high level, e.g., the state of charge is 100% or higher than 90%.

According to one aspect of the present invention, by associating a charging demand with the estimated time required to-be-charged vehicles (e.g., vehicles in a state of charge lower than $SOC_{LOW}$ (a given threshold)) to arrive at a battery-swapping station and the history data of the to-be-charged vehicles about battery swapping, one can accurately predict the charging demand at any moment in real time to execute an optimized charging strategy for under-charge batteries in the battery-swapping station.

Preferably, to-be-charged vehicles in a service area of a battery-swapping station are divided into a plurality of charge-requiring groups according to the estimated time required by them to arrive at the battery-swapping station, and a number of fully-charged batteries required by the plurality of charge-requiring groups is determined, thereby deciding the charging strategies for the under-charge batteries of the battery-swapping station.

As shall be pointed out, the service area herein can be understood as one: the probability of to-be-charged vehicles outside the service area coming to swap batteries in the current battery-swapping station could be ignored. In one exemplary case, the physical position of a battery-swapping station can be taken as a base point; and, to-be-charged vehicles in a service area are divided into a plurality of charge-requiring groups by discretizing vehicles at the present moment according to the distance from the battery-swapping station or the estimated time required the vehicles to reach the battery-swapping station at a given speed (e.g., the average speed of the vehicles in the service area). For example, the distance or estimated time can be classified into three sections or three periods, e.g., Section 1 is a distance less than 10 kilometers or a period less than 10 minutes to the battery-swapping station, Section 2 is a distance between 10 kilometers and 20 kilometers or a period between 10 minutes and 20 minutes to the battery-swapping station, and Section 3 is a distance between 20 kilometers and 30 kilometers or a period between 20 minutes and 30 minutes to the battery-swapping station; correspondingly, the to-be-charged vehicles in the service area are classified into their respective groups as per the distance and estimated time.

According to another aspect of the present invention, the charging rates for the under-charge batteries are employed to represent the charging strategies; that is, a plurality of discrete values of charging rates are employed to indicate different charging strategies. To be exemplary, the charging rate can be defined in the way of upgrading level by level as follows:

C_low: 0.2C (low charging rate);

C_normal: 0.5C (normal charging rate);

C_fast: 1C (rapid charging rate);

C_super: 1.5C (super rapid charging rate).

The 1C thereof indicates the corresponding current value with a battery charged from 0% to 100% electric quantity in one hour.

According to another aspect of the present invention, during determining charging demands, different weight factors are given to the numbers of fully-charged batteries required by respective charge-requiring groups so as to obtain a combination value of the number of fully-charged batteries required; and, corresponding charging strategies are determined by inspecting the matching situation between the combination value and the number of fully-charged batteries available at present. Preferably, different weight factors of a plurality of groups can be employed to obtain a plurality of combination values.

According to another aspect of the present invention, corresponding charging strategies can be determined by inspecting the matching situation between the number of fully-charged batteries required by a plurality of charge-requiring groups and fully-charged batteries available in several periods of time.

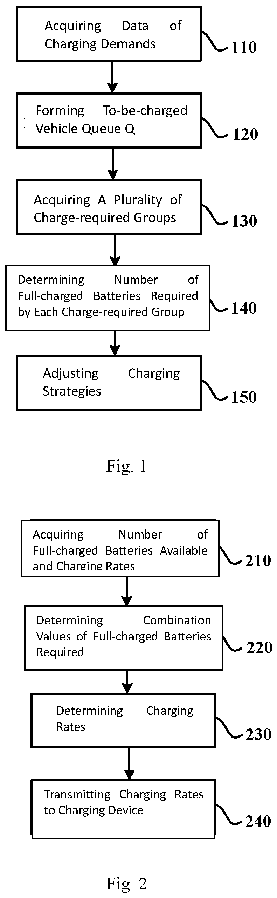

Fig. 1 is a flow chart illustrating the method of determining charging strategies for under-charge batteries within a battery-swapping station according to one embodiment of the present invention.

As illustrated in Fig. 1, at Step 110, a control device such as the management system of a battery-swapping station acquires data of charging demands within a service area of a battery-swapping station at the present moment. Here, the data of charging demands include, but is not limited to, the SOC (state of charge) of vehicles in the service area, the estimated time required by vehicles to arrive, identity information of vehicles (such as plate number) or user ID (such as the mobile phone number and registered name of a user) or the like.

Subsequently, Step 120 is taken, in which the control device adds the vehicles in the state of charge lower than $SOC_{LOW}$ (a given threshold) at the present moment within the service area into a to-be-charged vehicle queue Q.

Next, at Step 130, the control device divides the to-be-charged vehicles according to the estimated time required by them to arrive at the battery-swapping station into a plurality of charge-requiring groups. For example, according to the preceding method, to-be-charged vehicles are divided into three charge-requiring groups, wherein Charge-Requiring Group 1 includes to-be-charged vehicles from a distance less than 10 kilometers or those requiring a period less than 10 minutes to arrive the battery-swapping station, Charge-Requiring Group 2 includes to-be-charged vehicles from a distance between 10 kilometers and 20 kilometers or those requiring a period between 10 minutes and 20 minutes to arrive the battery-swapping station, and Charge-Requiring Group 3 includes to-be-charged vehicles from a distance between 20 kilometers and 30 kilometers or those requiring a period between 20 minutes and 30 minutes to arrive the battery-swapping station.

Subsequently, it is Step 140, in which the control device determines a number of the fully-charged batteries required by each of the charge-requiring groups. Preferably, the number of fully-charged batteries of each group can be determined in the way as follows:
Firstly, battery-swapping indexes of the to-be-charged vehicles in one charge-requiring group are acquired, wherein the battery-swapping indexes are obtained by the following equation:

$$\gamma_{i,j} = \frac{C_{i,j}}{T_{i,j}} \qquad \text{Equation (1),}$$

wherein $\gamma_{i,j}$ refers to the battery-swapping index of the $j^{th}$ to-be-charged vehicle within the $i^{th}$ charge-requiring group, $C_{i,j}$ refers to times of battery swapping having occurred in the state of charge lower than $SOC_{LOW}$ (a given threshold) for the $j^{th}$ to-be-charged vehicle in the $i^{th}$ charge-requiring group in history, and $T_{i,j}$ refers to total times of battery swapping having occurred for the $j^{th}$ to-be-charged vehicle within the $i^{th}$ charge-requiring group.

Subsequently, the battery-swapping indexes of to-be-charged vehicles in the charge-requiring group are summed to obtain the number $H_i$ of fully-charged batteries required by the charge-requiring group, i.e.,

$$H_i = \sum_{j=1}^{N_i} \gamma_{i,j} \qquad \text{Equation (2),}$$

wherein $H_i$ refers to the number of fully-charged batteries required by the $i^{th}$ charge-requiring group, $\gamma_{i,j}$ refers to the battery-swapping index of the $j^{th}$ to-be-charged vehicle within the $i^{th}$ charge-requiring group, and Ni refers to the number of to-be-charged vehicles within the $i^{th}$ charge-requiring group.

Next, at Step 150, the charging strategies are decided, and the control device determines the charging strategies for the under-charge batteries of the battery-swapping station based on the number of fully-charged batteries required in the charge-requiring group. Further delineation will be made below.

The method of Fig. 1 can be executed periodically to dynamically determine charging strategies for under-charge batteries.

Fig. 2 is a flow chart pertaining to a determination routine of charging strategies that can be applied to the embodiment illustrated by Fig. 1.

As is illustrated in Fig. 2, at Step 210, the number P_full of fully-charged batteries available at present in the battery-swapping station and the current charging rate are obtained.

Subsequently, Step 220 is taken, in which one or more combination values of the number of the fully-charged batteries required by a plurality of charge-requiring groups are determined. Taking above three charge-requiring groups as an example, the combination value of the number of required fully-charged batteries can be expressed by the following equation:

$$S_i = \alpha_i H_1 + \beta_i H_2 + \gamma_i H_3 \qquad \text{Equation (3),}$$

Wherein $S_i$ refers to the $i^{th}$ combination value, $H_1$, $H_2$, $H_3$ respectively refer to the number of fully-charged batteries required by Charge-Requiring Group 1, Charge-Requiring Group 2 and Charge-Requiring Group 3, and $\alpha_i$, $\beta_i$ and $\gamma_i$ refer to weight factors given to Charge-Requiring Groups 1-3 during the computation of the $i^{th}$ combination value.

For example, the following three combination values can be employed.
Combination Value $S_1$: $H_1+0.8*H_2+0.5*H_3$;
Combination Value $S_2$: $H_1+H_2+H_3$;
Combination Value $S_3$: $H_1+1.5*H_2+0.5*H_3$.

Subsequently, at Step 230, corresponding charging rates are determined by the combination values and the number of fully-charged batteries available in the charge-requiring groups at present. To be exemplary, charging strategies can be determined based on the following rules:

Rule 1: if $H_1+0.8*H_2+0.5*H_3 \geq P\_full$, the charging rate will be set to be C_super;

Rule 2: if $H_1+H_2+H_3 \geq P\_full > H_1+0.8*H_2+0.5*H_3$, the charging rate will be set to be C_fast; and,

Rule 3: in the case of $H_1+1.5*H_2+0.5*H_3 \geq P\_full > H_1+H_2+H_3$, if the current charging rate is C low, the charging rate will be changed into C_normal; if the current charging rate is Cnormal, the charging rate will be kept unchanged;

Rule 4: If $P\_full > H_1+1.5*H_2+0.5*H_3$, the current charing rate will be kept unchanged.

After Step 230 is finished, Step 240 is taken, in which the control device transmits the determined charging rate to a charging device.

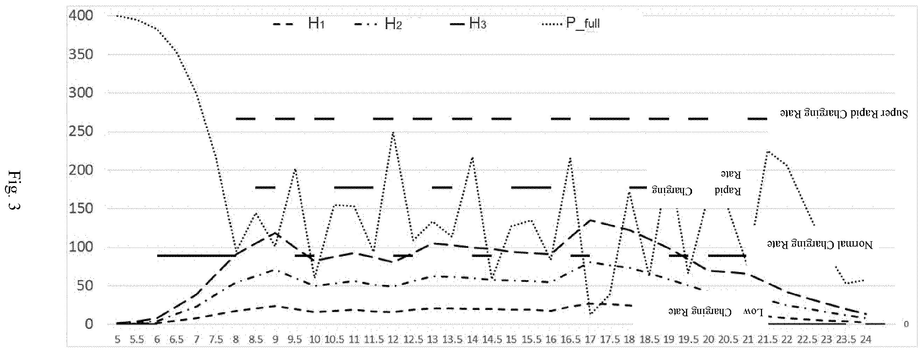

Fig. 3 is an exemplary chart indicating simulative results obtained from the determination routine of charging strategies of Fig. 2, wherein the horizontal axis represents time within one day, the vertical axis represents the number of fully-charged batteries. For example, it is assumed that the initial number of fully-charged batteries at 5 AM is 400. In Fig. 3, high or low horizontal lines in different positions respectively refer to periods of time when batteries are changed at different charging rates. As shown in Fig. 3, although a battery-swapping demand always remains in a relatively high level in daytime, under-charge batteries are charged by normal charging rate, rapid charging rate and super rapid charging rate that are dynamically alternated such that the number of fully-charged batteries available at any time will match the battery-swapping demand quite well.

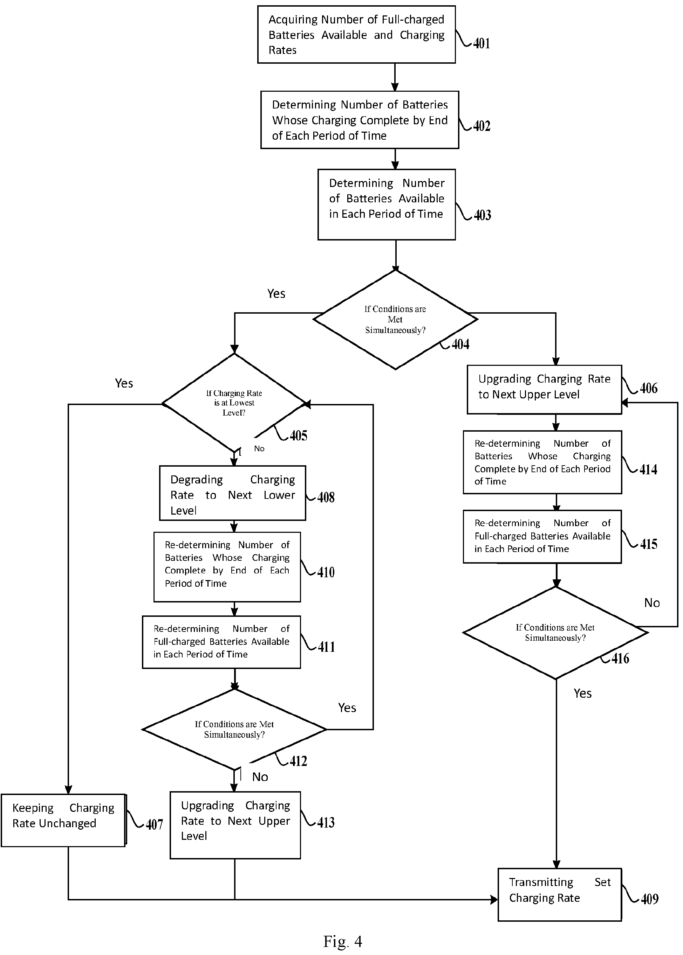

Fig. 4 is a flow chart pertaining to another determination routine of charging strategies that can be applied to the embodiment illustrated by Fig. 1.

As is illustrated in Fig. 4, at Step 401, the control device obtains the number $P_{\_full}$ of fully-charged batteries available at present in the battery-swapping station and the charging rate at present.

Subsequently, at Step 402, with the current charging rate, the control device determines the number of batteries whose charging will be completed by the end of a plurality of periods of time. Taking the above case as an example, on the assumption that estimated time is classified into three periods of time as a period of time required to arrive at the battery-swapping station is less than 10 minutes, a period of time required to arrive at the battery-swapping station is between 10 minutes and 20 minutes, and a period of time required to arrive at the battery-swapping station is between 20 minutes and 30 minutes, the control device will compute the number batteries completely charged by the end of the first period of time (namely, the number of batteries whose state of charge will reach a high level in 10 minutes from the present moment) and the number batteries completely charged by the end of the second period of time (namely, the number of batteries whose state of charge will reach a high level in 20 minutes from the present moment) when under-charge batteries are charged at the current charging rate.

Subsequently, at Step 403, the control device determines a number of fully-charged batteries available in the plurality of periods of time based on the number of fully-charged batteries available at present and the number of batteries whose charging will be completed by the end of the plurality of periods of time. Still taking the above case as an example, in the first period of time less than 10 minutes, the number of fully-charged batteries available is the number of fully-charged batteries available at present. In the second period of time between 10 minutes and 20 minutes, the number of fully-charged batteries available is determined by the following equation:

$$P_{\_full\_10} = P_{\_full} + C_{\_full\_10} - H_1 \qquad \text{Equation (4)},$$

wherein $P_{\_full\_10}$ refers to the number of fully-charged batteries available in the second period of time, $P_{\_full}$ refers to the number of fully-charged batteries available at present, $C_{\_full\_10}$ refers to the number of batteries whose charging will be completed by the end of the first period of time, and $H_1$ refers to the fully-charged batteries required by the first charge-requiring group or the first period of time.

In the third period of time between 20 minutes and 30 minutes, the number of fully-charged batteries available is determined by the following equation:

$$P_{\_full\_20} = P_{\_full} + C_{\_full\_10} + C_{\_full\_20} - H_1 - H_2 \qquad \text{Equation (5)},$$

wherein $P_{\_full\_20}$ refers to the number of fully-charged batteries available in the second period of time, $P_{\_full}$ refers to the number of fully-charged batteries available at present, $C_{\_full\_10}$ refers to the number of batteries availabe in the first period of time, $C_{\_full\_20}$ refers to the number of batteries whose charging will be completed by the end of the second period of time, $H_1$ refers to the fully-charged batteries required by the first charge-requiring group or the first period of time, and $H_2$ refers to the fully-charged batteries required by the second charge-requiring group or the second period of time.

Subsequently, at Step 404, the control device judges whether or not the following conditions are met:

Condition 1: $H_1 < P_{\_full}$;
Condition 2: $H_2 < P_{\_full\_10}$; and,
Condition 3: $H_3 < P_{\_full\_20}$.

If Condition 1 and Condition 3 are met simultaneously, Step 405 will be taken; otherwise, Step 406 will be taken.

At Step 405, the control device judges whether the current charging rate is of C low, the lowest level; if the result is YES, Step 407 will be taken, in which the control device will determine to keep the current charging rate unchanged; if the result is NO, Step 408 will be taken, in which the control device will lower the current charging rate to the next lower level.

After Step 407, Step 409 is taken, in which the control device transmits a given charging rate to the charging device.

After Step 408, Step 410 is taken, in which the control device, using the means the same as that of Step 402, determines the number of batteries whose charging can be completed in a plurality of periods of time at the changed charging rate.

Subsequently, at Step 411, the control device, using the means the same as that of Step 403, determines the number of fully-charged batteries available in the plurality of periods of time according to the number of fully-charged batteries available at present and the number of batteries whose charging can be completed as determined at Step 410.

Subsequently, Step 412 is taken, in which the control device judges whether the number of fully-charged batteries available in the plurality of periods of time, as determined at Step 411, can meet the conditions of Step 404 simultaneously. If the conditions are met, the process will go back to Step 405, in which the control device will upgrade the charging rate to the next upper level. After that, Step 409 is taken.

The process goes back to Step 406 which is another branch step of Step 404. At Step 406, the control device upgrades the current charging rate to the next upper level.

Subsequently, Step 414 is taken, in which the control device, using the means the same as that of Step 402, determines the number of batteries whose charging can be completed in a plurality of periods of time at the changed charging rate.

Subsequently, Step 415 is taken, in which the control device, using the means the same as that of Step 403, determines the number of fully-charged batteries available in the plurality of periods of time according to the number of fully-charged batteries available at present and the number of batteries whose charging can be completed in the plurality of periods of time as determined at Step 414.

Subsequently, Step 416 is taken, in which the control device judges whether the number of fully-charged batteries available in the plurality of periods of time, as determined at Step 415, can meet the conditions of Step 404 simultaneously. If the conditions are met, Step 409 will be taken; otherwise, the proecess will go back to Step 406.

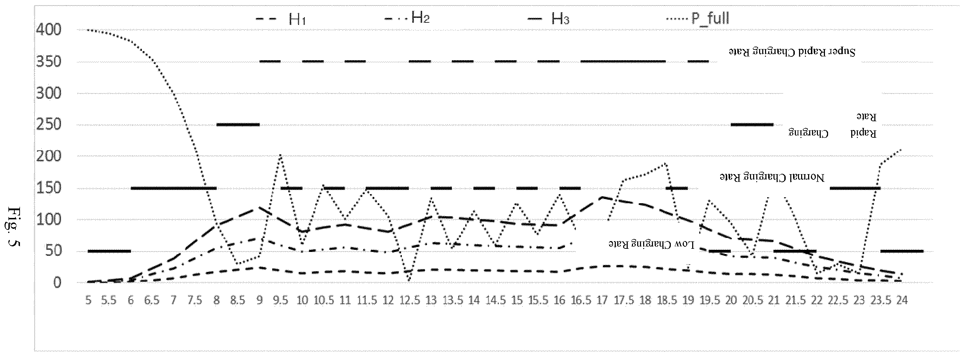

Fig. 5 is an exemplary chart indicating simulative results obtained from the determination routine of charging strategies of Fig. 4, wherein the horizontal axis represents time within one day, the vertical axis represents the number of batteries. For example, it is assumed as previously that the initial number of fully-charged batteries at 5 AM is 400. In Fig. 5, high or low horizontal lines in different positions respectively refer to periods of time when batteries are changed at different charging rates. In comparison with Fig. 3, with a sound match between available fully-charged batteries and battery-swapping demands, the normal charging rate of Fig. 5 significantly increases.

Alternatively, in some examples of the present invention, initial charging rate may also be set for electric vehicles. For example, charging rates can be set according to travel time of vehicles. To be specific, a natural day can be divided into three periods of time according to travel data; in a 24-hour system, 0-6 can be set as the first period of time, 6-18 as the second one and 18-24 as the third one. In the three periods of time, the first one is the ascending phase of travel frequency, in which the batteries of a battery-swapping station have a relatively long period of time for charging. Thus, the charging rate of the first period of time can be set to be C low. In the second period of time, vehicles keep at a high travel frequency with a high demand for battery swapping. Thus, the charging rate of the second period of time can be set to be C_normal. In the third period of time, since the travel frequency of vehicles descends, the battery-swapping demand is lowered. Thus, the charging rate of the second period of time can be set to be C low. In the case with an initial charging rate being set, the aforesaid method of determining charging strategies for under-charge batteries in a battery-swapping station can be employed to adjust the initial charging rate. For instance, one can employ the example as described above with the combination of Figs. 1 and 2 or the example described with the combination of Figs. 1 and 4.

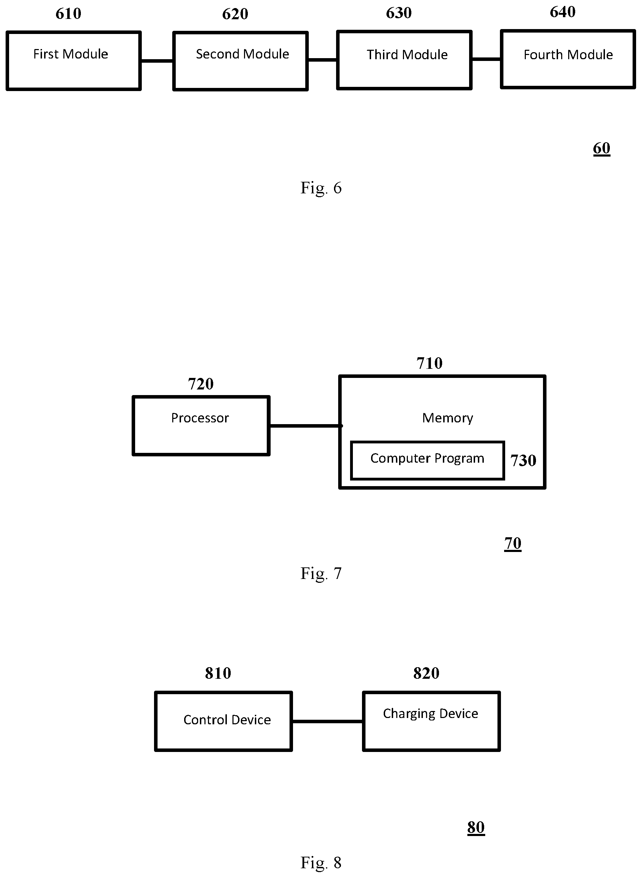

Fig. 6 is a schematic block diagram illustrating the device of determining charging strategies for under-charge batteries within a battery-swapping station according to another embodiment of the present invention.

As shown by Fig. 6, the device 60 of determining charging strategies for under-charge batteries within the battery-swapping station comprises a first module 610, a second module 620, a third module 630 and a fourth module 640. In this embodiment, the first module 610 is intended for acquiring estimated time required by to-be-charged vehicles to arrive at a battery-swapping station, wherein the to-be-charged vehicles are ones in a state of charge lower than a given threshold; the second module 620 is intended for dividing the to-be-charged vehicles according to the estimated time required by the to-be-charged vehicles to arrive at the battery-swapping station into a plurality of charge-requiring groups; the third module 630 is intended for determining a number of fully-charged batteries required by each of the charge-requiring groups; and, the fourth module 640 for determining the charging strategies for the under-charge batteries of the battery-swapping station based on the number of fully-charged batteries required by the plurality of charge-requiring groups.

It is necessary to point out that multiple means can be employed to enable the device 60. For example, in one implementation means, each of the first, second, third, and fourth modules is implemented by respective hardware devices independent of one another. And, in another implementation means, at least two of the first, second, third and fourth modules are implemented by the same hardware device.

Fig. 7 is a schematic block diagram illustrating the control device according to one else embodiment of the present invention.

As illustrated by Fig. 7, the control device 70 includes a memory 710, a processor 720 and a computer program 730 that is stored in the memory and may be executed by the processor 720, wherein the computer program 730 can enable the method of determining charging strategies for under-charge batteries within a battery-swapping station as illustrated by Figs. 1-5.

Generally, a battery-swapping station has a capability of communicating with to-be-charged vehicles to obtain information such as vehicle position and speed. Preferably, the said control devices 60 and 70 can be configured to acquire vehicle information from a battery-swapping station (such as the position and speed of vehicles heading for the battery-swapping station), whereby the time when the vehicles arrive at the battery-swapping station. It is necessary to point out that the means by which the control device obtains information of vehicles with batteries to be swapped is not unique or indispensable. According to another means, vehicles with batteries to be swapped can upload their information, such as position and speed, onto Clouds, whereby the control device can download from the Clouds the information of the vehicles with batteries to be swapped.

Fig. 8 is a schematic block diagram illustrating the battery-swapping station according to one else embodiment of the present invention.

As illustrated in Fig. 8, the battery-swapping station comprises a control device 810 and a charging device 820. In this embodiment, the control device 810 can be implemented by the control device illustrated in Fig. 7, and the charging device 820 is configured to charge under-charge batteries at the charging rate determined by the control device 810.

According to another aspect of the present invention, the present invention further provides a computer-readable medium with a computer program stored thereon, wherein the computer program can enable the method of determining charging strategies for under-charge batteries within a battery-swapping station as illustrated by Figs. 1-5.

The embodiments and examples are provided in the text to explain, to the greatest extent, the technologies and their applications relevant to the present invention, whereby those skilled in the art can implement and use the present invention. However, those skilled in the art will be aware that the description and examples are purely offered to facilitate explanation and citing examples. The description set forth is not intended to cover all aspects of the present invention or limit the present invention within the disclosed precise forms.

In terms of above statement, the scope of the disclosure will be determined by the following Claims.

## Claims

1. A method of determining charging strategies for under-charge batteries within a battery-swapping station, comprising the following steps:

   acquiring estimated time required to-be-charged vehicles to arrive at the battery-swapping station, wherein the to-be-charged vehicles are ones in a state of charge lower than a given threshold;
   dividing the to-be-charged vehicles, according to the estimated time required by to-be-charged vehicles to arrive at a battery-swapping station, into a plurality of charge-requiring groups, each of which corresponds to one of a plurality of periods of time;
   determining a number of fully-charged batteries required by each of the charge-requiring groups; and,
   determining the charging strategies for the under-charge batteries of the battery-swapping station based on the number of fully-charged batteries required by the charge-requiring groups.

2. The method according to claim 1, wherein the estimated time required by the to-be-charged vehicles to arrive at the battery-swapping station is determined based on a distance between the to-be-charged vehicles and the battery-swapping station and on an estimated speed.

3. The method according to claim 1, wherein determination of the number of fully-charged batteries required by each of the charge-requiring groups comprises the following steps:

   acquiring battery-swapping indexes of the to-be-charged vehicles within the charge-requiring group, wherein the battery-swapping indexes are obtained by the following equation:

$$\gamma_{i,j} = \frac{C_{i,j}}{T_{i,j}}$$

wherein $\gamma_{i,j}$ refers to the battery-swapping index of the $j^{th}$ to-be-charged vehicle within the $i^{th}$ charge-requiring group, $C_{i,j}$ refers to times of battery swapping having occurred in the state of charge lower than the given threshold for the $j^{th}$ to-be-charged vehicle in the $i^{th}$ charge-requiring group, and $T_{i,j}$ refers to total times of battery swapping having occurred for the $j^{th}$ to-be-charged vehicle j within the $i^{th}$ charge-requiring group; and
summing the battery-swapping indexes of the to-be-charged vehicles within the charge-requiring group to obtain the number of fully-charged batteries required by the charge-requiring group.

4. The method according to claim 1, wherein charging rates for the under-charge batteries are employed to represent the charging strategies.

5. The method according to claim 1, where determination of the the charging strategies comprises the following steps:

determining a combination value of a number of the fully-charged batteries required by the plurality of charge-requiring groups; and,
determining the charging strategies for the under-charge batteries of the battery-swapping station based on the number of fully-charged batteries available in the battery-swapping station at present.

6. The method according to claim 4, where determination of the the charging strategies comprises the following steps:

at a current charging rate, determining a number of batteries whose charging will be completed by the end of the plurality of periods of time;
determining a number of fully-charged batteries available in the plurality of periods of time based on the number of fully-charged batteries available at present and the number of batteries whose charging will be completed by the end of the plurality of periods of time; and,
selecting from a plurality of the charging rates an optimized one to match the number of fully-charged batteries available in the plurality of periods of time with the number of fully-charged batteries required by each of the charge-requiring groups most.

7. A device of determining charging strategies for under-charge batteries within a battery-swapping station, comprising:

a first module for acquiring estimated time required by to-be-charged vehicles to arrive at a battery-swapping station, wherein the to-be-charged vehicles are ones in a state of charge lower than a given threshold;
a second module for dividing the to-be-charged vehicles according to the estimated time required by the to-be-charged vehicles to arrive at the battery-swapping station into a plurality of charge-requiring groups;
a third module for determining a number of fully-charged batteries required by each of the charge-requiring groups; and,
a fourth module for determining the charging strategies for the under-charge batteries of the battery-swapping station based on the number of fully-charged batteries required by the plurality of charge-requiring groups.

8. A control device, comprising a memory, a processor and a computer program that is stored in the memory and may be executed by the processor, wherein the program is executed to enable the method according to any one of claims 1-6.

9. A battery-swapping station, comprising:

the control device according to claim 8; and,
a charging device configured to charge under-charge batteries according to a charging rate determined by the control device.

10. A computer-readable medium with a computer program stored thereon, **characterized in that** the method according to any one of claims 1-6 is enabled while the computer program is executed by a processor.

Acquiring Data of Charging Demands ⌒110

Forming To-be-charged Vehicle Queue Q ⌒120

Acquiring A Plurality of Charge-required Groups ⌒130

Determining Number of Full-charged Batteries Required by Each Charge-required Group ⌒140

Adjusting Charging Strategies ⌒150

Fig. 1

Acquiring Number of Full-charged Batteries Available and Charging Rates ⌒210

Determining Combination Values of Full-charged Batteries Required ⌒220

Determining Charging Rates ⌒230

Transmitting Charging Rates to Charging Device ⌒240

Fig. 2

Fig. 3

Fig. 4

Fig. 5

**610** **620** **630** **640**

| First Module | | Second Module | | Third Module | | Fourth Module |

**60**

Fig. 6

**710**

**720**

| Processor |

Memory

| Computer Program | **730**

**70**

Fig. 7

**810** **820**

| Control Device | | Charging Device |

**80**

Fig. 8

### INTERNATIONAL SEARCH REPORT

| International application No. |
| --- |
| **PCT/CN2018/109982** |

**A. CLASSIFICATION OF SUBJECT MATTER**

G06Q 10/06(2012.01)i

According to International Patent Classification (IPC) or to both national classification and IPC

**B. FIELDS SEARCHED**

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNPAT, CNKI, WPI, EPODOC, IEEE: 换电站, 充电站, 充电, 时间, 到达, 分组, charg???, time, arrive, group, station

**C. DOCUMENTS CONSIDERED TO BE RELEVANT**

| Category* | Citation of document, with indication, where appropriate, of the relevant passages | Relevant to claim No. |
| --- | --- | --- |
| A | CN 103646295 A (SOUTHEAST UNIVERSITY) 19 March 2014 (2014-03-19) claims 1-2, description, paragraphs 0064-0110, and figures 1-8 | 1-10 |
| A | CN 106926717 A (NEXTEV LIMITED) 07 July 2017 (2017-07-07) entire document | 1-10 |
| A | CN 102496980 A (TSINGHUA UNIVERSITY) 13 June 2012 (2012-06-13) entire document | 1-10 |
| A | CN 106427654 A (ZHENGZHOU TIAMAES TECHNOLOGY CO., LTD.) 22 February 2017 (2017-02-22) entire document | 1-10 |
| A | CN 105904985 A (DONGGUAN LIANZHOU INTELLECTUAL PROPERTY OPERATIONS MANAGEMENT CO., LTD.) 31 August 2016 (2016-08-31) entire document | 1-10 |
| A | CN 106356922 A (ELECTRIC POWER RESEARCH INSTITUTE, CHINA SOUTHERN POWER GRID ET AL.) 25 January 2017 (2017-01-25) entire document | 1-10 |
| A | JP 2010534053 A (BERDICHEVSKY, E.M. ET AL.) 28 October 2010 (2010-10-28) entire document | 1-10 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **17 December 2018** | **04 January 2019** |

| Name and mailing address of the ISA/CN | Authorized officer |
| --- | --- |
| **State Intellectual Property Office of the P. R. China** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/109982**

| Patent document cited in search report | | | Publication date (day/month/year) | Patent family member(s) | | | Publication date (day/month/year) |
|---|---|---|---|---|---|---|---|
| CN | 103646295 | A | 19 March 2014 | CN | 103646295 | B | 06 July 2016 |
| CN | 106926717 | A | 07 July 2017 | WO | 2018090743 | A1 | 24 May 2018 |
| CN | 102496980 | A | 13 June 2012 | CN | 102496980 | B | 21 May 2014 |
| CN | 106427654 | A | 22 February 2017 | | None | | |
| CN | 105904985 | A | 31 August 2016 | CN | 105904985 | B | 04 September 2018 |
| CN | 106356922 | A | 25 January 2017 | CN | 106356922 | B | 25 September 2018 |
| JP | 2010534053 | A | 28 October 2010 | EP | 2183125 | A2 | 12 May 2010 |
| | | | | US | 2009216688 | A1 | 27 August 2009 |
| | | | | JP | 5088976 | B2 | 05 December 2012 |
| | | | | US | 2009212745 | A1 | 27 August 2009 |
| | | | | US | 7719232 | B2 | 18 May 2010 |
| | | | | WO | 2009012018 | A3 | 14 May 2009 |
| | | | | US | 2009021218 | A1 | 22 January 2009 |
| | | | | WO | 2009012018 | A2 | 22 January 2009 |
| | | | | AU | 2008276398 | B2 | 23 December 2010 |
| | | | | US | 7786704 | B2 | 31 August 2010 |
| | | | | US | 7782021 | B2 | 24 August 2010 |
| | | | | CN | 101821121 | B | 26 September 2012 |
| | | | | CN | 101821121 | A | 01 September 2010 |
| | | | | AU | 2008276398 | A1 | 22 January 2009 |

Form PCT/ISA/210 (patent family annex) (January 2015)